# EUROPEAN PATENT SPECIFICATION

(11) **EP 4 199 211 B1**
(45) Date of publication and mention of the grant of the patent: **21.05.2025**
(21) Application number: 21215179.9
(22) Date of filing: 16.12.2021
(51) Int. Cl.: H01M 50/204, H01M 50/531, H01M 50/578

(54) **BATTERY CELL AND BATTERY SYSTEM**
BATTERIEZELLE UND BATTERIESYSTEM
CELLULE DE BATTERIE ET SYSTÈME DE BATTERIE

(43) Date of publication of application: 21.06.2023
(73) Proprietor: Samsung SDI Co., Ltd., Yongin-si, Gyeonggi-do 17084 (KR)
(72) Inventor: Golubkov, Andrej, 8010 Graz (AT)
(74) Representative: Gulde & Partner

(56) References cited:
- JP-A- 2004 172 085
- US-A1- 2010 316 905

## Description

### Field of the Disclosure

The present disclosure relates to a battery cell for an electric vehicle and to a battery system comprising such a battery cell.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for electric and hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy content, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series *(XpYs)* or multiple cells connected in series that are connected in parallel *(XsYp).*

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

A battery system further includes a battery management system (BMS), which is any electronic system that manages the rechargeable battery, battery module and battery pack, such as by protecting the batteries from operating outside their safe operating area, monitoring their states, calculating secondary data, reporting that data, controlling its environment, authenticating it and/or balancing it. For example, the BMS may monitor the state of the battery as represented by voltage (such as total voltage of the battery pack or battery modules, voltages of individual cells), temperature (such as average temperature of the battery pack or battery modules, coolant intake temperature, coolant output temperature, or temperatures of individual cells), coolant flow (such as flow rate, cooling liquid pressure), and current. Additionally, a BMS may calculate values based on the above items, such as minimum and maximum cell voltage, state of charge (SOC) or depth of discharge (DOD) to indicate the charge level of the battery, state of health (SOH; a variously-defined measurement of the remaining capacity of the battery as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. The BMS may be also distributed, wherein a BMS board is installed at each cell, with just a single communication cable between the battery and a controller. Or the BMS may be of modular construction including a few controllers, each handling a certain number of cells, with communication between the controllers. Centralized BMSs are most economical, least expandable, and are plagued by a multitude of wires. Distributed BMSs are the most expensive, simplest to install, and offer the cleanest assembly. Modular BMSs offer a compromise of the features and problems of the other two topologies.

The BMS may protect the battery pack from operating outside its safe operating area. Operation outside the safe operating area may be indicated in case of over-current, overvoltage (during charging), over-temperature, under-temperature, over-pressure, and ground fault or leakage current detection. The BMS may prevent operation outside the battery's safe operating area by including an internal switch (such as a relay or solid-state device) which is opened if the battery is operated outside its safe operating area, requesting the devices to which the battery is connected to reduce or even terminate using the battery, and actively controlling the environment, such as through heaters, fans, air conditioning or liquid cooling.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge, SoC, potential electrical performance, charging ability and internal resistance as well as actual or predicted power demands or surpluses of the consumers. Therefore, battery systems usually comprise a battery management system, BMS, for obtaining and processing such information on system level and further a plurality of battery module managers, BMMs, which are part of the system's battery modules and obtain and process relevant information on module level. Particularly, the BMS usually measures the system voltage, the system current, the local temperature at different places inside the system housing, and the insulation resistance between live components and the system housing. Additionally, the BMMs usually measure the individual cell voltages and temperatures of the battery cells in a battery module.

Thus, the BMS/BMU is provided for managing the battery pack, such as by protecting the battery from operating outside its safe operating area, monitoring its state, calculating secondary data, reporting that data, controlling its environment, authenticating it and/or balancing it.

In case of an abnormal operation state, a battery pack shall usually be disconnected from a load connected to a terminal of the battery pack. Therefore, battery systems further comprise a battery disconnect unit, BDU, that is electrically connected between the battery module and battery system terminals. Thus, the BDU is the primary interface between the battery pack and the electrical system of the vehicle. The BDU includes electromechanical switches that open or close high current paths between the battery pack and the electrical system. The BDU provides feedback to the battery control unit, BCU, accompanied to the battery modules such as voltage and current measurements. The BCU controls the switches in the BDU using low current paths based on the feedback received from the BDU. The main functions of the BDU may thus include controlling current flow between the battery pack and the electrical system and current sensing. The BDU may further manage additional functions like external charging and pre-charging.

Exothermic decomposition of cell components may lead to a so-called thermal runaway. In general, thermal runaway describes a process that is accelerated by increased temperature, in turn releasing energy that further increases temperature. Thermal runaway occurs in situations where an increase in temperature changes the conditions in a way that causes a further increase in temperature, often leading to a destructive result. In rechargeable battery systems, thermal runaway is associated with strongly exothermic reactions that are accelerated by temperature rise. These exothermic reactions include combustion of flammable gas compositions within the battery pack housing. For example, when a cell is heated above a critical temperature (typically above 150°C) it can transit into a thermal runaway. The initial heating may be caused by a local failure, such as a cell internal short circuit, heating from a defect electrical contact, short circuit to a neighboring cell. During the thermal runaway, a failed battery cell, i.e., a battery cell which has a local failure, may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore burnable and potentially toxic. The vented gas also causes a gas-pressure increase inside the battery pack.

Most battery systems consist of a sealed battery pack housing or casing which contains multiple rechargeable battery cells. The battery cells may be grouped into cell-stacks or modules, a battery pack then containing several modules, as mentioned above. To achieve a desired capacity and voltage of the module, busbars connect the cells electrically in series or in parallel. Further, the modules themselves may be interconnected in series until the desired system voltage of the battery pack is reached.

The electrochemical cells of such rechargeable battery cells may consist of repeating units of a negative electrode sheet, an electron insulating separator sheet, a positive electrode sheet and again a separator sheet. The sheets are stacked or wound to achieve a desired contact area between the electrodes. Liquid or solid electrolyte provides ionic connection between the electrodes. Electric current collectors may connect the electrodes to the outside terminals. The electrodes, electrolyte, separator and current collectors that form the electrochemical cells are contained in a hermetically sealed cell-packaging.

An overcharge safety device, OSD, may be present in a cell. In case of overpressure inside the cell the OSD interrupts one of the current collectors and the cell can no longer conduct the electrical current. Thus, the cell becomes electrically disconnected. The overpressure inside the cell may be caused by additives in the electrolyte, which create gas when the cell is overcharged. JP 2004 172085 A describes such a safety device.

When a cell reaches a temperature above a critical temperature (typically above 150°C) it can transit into a thermal runaway as mentioned above. The initial heating may be caused by a local failure, for example a cell internal short circuit, heating from a bad electrical contact, or a short circuit to a neighboring cell. During thermal runaway the failed cell may heat up to cell temperatures of 700°C to 900°C and thus much higher than the critical temperature.

During the thermal runaway large volumes of gas are released in short time, the time duration of the whole reaction may e.g be only one second. The resulting violent gas-flow transports electrode material, usually copper, to the outside of the cell and into the battery pack. As copper has a high melting temperature (1080°C) it does not melt during the thermal runaway but instead pieces of copper foil of several centimeters in size may be ejected by the cell into the inside of the battery pack. As the battery cells of the battery pack are electrically interconnected, the copper pieces may create short circuits and electric arcs between the cells/modules inside the battery pack, e.g. when the pieces connect uninsulated components of different electric potentials.

Even without a thermal runaway, however, the battery pack may become a danger to the personnel which has to handle it, e.g. fireman, recycling personnel and/or mechanics, if the battery pack suffers damage of some kind and the status of the pack is not known. Inside the damaged pack high voltages may be present, which are a risk to the personnel.

Thus, there exists a need to provide a battery cell and a battery system comprising such a battery cell which are safer to use.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery cell for an electric vehicle is provided, the battery cell comprising a cell housing, an electrochemical cell encased by the cell housing, the electrochemical cell comprising a first electrode and a second electrode, a first terminal being electrically connected to the first electrode and a second terminal being electrically connected to the second electrode, the battery cell further comprising a cell disconnect device adapted to electrically disconnect the battery cell from further battery cells of a battery system in case of an overpressure outside of the cell housing.

According to another aspect of the present disclosure, a battery system is provided comprising a system housing and a plurality of such battery cells accommodated within the system housing.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
Fig. 1 is a schematic sectional view illustrating a battery cell according to an embodiment of the invention,
Fig. 2 is a schematic sectional view illustrating the battery cell of Fig. 1 with an actuated cell disconnect device, and
Fig. 3 is a battery system according to an embodiment of the invention comprising multiple of the battery cells shown in Fig. 1 and 2.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the appended claims. As used herein, the term "and/or" includes any and all combinations of one or more of the associated listed items. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to an aspect of the disclosure, a battery cell is provided, the battery cell being adapted to be used as part of a rechargeable battery of an electric vehicle. The battery cell itself is rechargeable. The battery cell may be part of a traction battery of an electric vehicle. The battery cell comprises a cell housing accommodating an electrochemical cell as an energy storage. As explained introductory, rechargeable battery cells include an electrochemical cell or electrode assembly including a positive electrode, a negative electrode, and a separator interposed between the positive and negative electrodes, the cell housing or case receiving the electrochemical cell, and electrode terminals electrically connected to the electrochemical cell. An electrolyte solution is injected into the cell housing in order to enable charging and discharging of the battery cell via an electrochemical reaction of the positive electrode, the negative electrode, and the electrolyte solution. The electrochemical cell thus comprises a first electrode and a second electrode, a first terminal being electrically connected to the first electrode and a second terminal being electrically connected to the second electrode. The first electrode may be the positive electrode and the second electrode the negative electrode or vice versa. The terminals are arranged outside of the cell housing to allow an electrical connection of the battery cell with another battery cell. The electrodes are arranged inside the cell housing. A first current collector may be arranged inside the cell housing forming an electrical interconnection between the first electrode and the first terminal. Correspondingly, a second current collector may be arranged inside the cell housing forming an electrical interconnection between the second electrode and the second terminal.

The battery cell according to the invention comprises a cell disconnect device adapted to electrically disconnect the battery cell from further battery cells of a battery system in case of an overpressure outside of the cell housing. The battery cell may be part of a battery pack or battery system comprising multiple battery cells being electrically interconnected as explained above. The battery cell according to this aspect of the disclosure is disconnected from these further battery cells if there is an overpressure outside of the cell housing of the battery cell, in particular disconnected from any other battery cells it is electrically connected to, for example from any other battery cells of the battery system. The outside of the cell housing of the battery cell means in particular the inside of a system housing of a battery system surrounding/comprising the battery cell. An overpressure means that a pressure outside of the cell housing, in particular the pressure inside the surrounding system housing, exceeds a predefined value. In particular, an overpressure may mean that the pressure outside of the cell housing exceeds the pressure inside of the cell housing by a predefined value.

The cell disconnect device may be adapted to detect the overpressure, in particular a pressure difference between the pressure outside of the cell housing and the pressure inside of the cell housing. The cell disconnect device may comprise one or more pressure sensors for detecting the overpressure. For example, a pressure sensor may be arranged to measure the pressure outside of the cell housing, wherein a control unit, e.g. the BMS, may be configured to trigger the cell disconnect device if the pressure sensor measures a pressure value exceeding a predefined value. Also, a first pressure sensor may be arranged to measure the pressure outside of the cell housing while a second pressure sensor may be arranged to measure the pressure inside the cell housing, wherein the control unit may be configured to trigger the cell disconnect device if the outside pressure exceeds the inside pressure by a predefined value. The cell disconnect device may thus be adapted to be electrically actuated. Preferably, however, the cell disconnect device may be adapted to be mechanically actuated, may e.g. be formed by a membrane or diaphragm, as will be explained below.

Due to the cell disconnect device the battery cell is electrically disconnected from further battery cells of the battery system in case of an overpressure outside of the cell housing of the battery cell so that the battery cell can no longer be the cause of short circuits or electric arcing between the battery cells of the battery system. With respect to the overcharge safety devices explained introductory, the battery cell according to the invention is disconnected not or not only if there is an overpressure inside the cell housing but if there is an overpressure outside the cell housing. The cell disconnect device according to the invention may thus be understood as an inverse overcharge safety device. This outside overpressure may be generated deliberately to achieve the disconnection of the battery cell. For example, in a battery system means may be provided to generate such an overpressure in the system housing of the battery system and thus outside of the cell housing of the battery cell. Via such means the battery cell, or multiple or all of the battery cells of the battery system, may be disconnected. In particular, all of the interconnected battery cells of the battery system may be disconnected from one another. Thus, copper pieces depositing on the cells during a thermal runaway can no longer create short circuits or electric arcs between the cells/modules inside the battery system. Also, the battery cell and the whole battery system do no longer represent a risk for personnel handling the battery cell/system as no dangerously high voltages are present. Until now there is no easy way to electrically disconnect or discharge the battery cells of a damaged battery pack without opening of the system housing. The invention provides a simple solution for electrical disconnection via the cell disconnect device reacting to an overpressure outside the cells.

The invention also pertains to a battery system which comprises a system housing and a plurality of battery cells as the one explained above, the plurality of battery cells being accommodated within the system housing. The battery cells may form part of a battery, in particular a traction battery, supplying the electric vehicle. As explained above, the plurality of battery cells may be grouped into cell-stacks or modules, a battery pack then containing several modules. To achieve a desired capacity and voltage of the module, busbars connect the cells electrically in series or in parallel. Further, the modules themselves may be interconnected in series until the desired system voltage of the battery system is reached. As mentioned, the battery system may comprise means for establishing an overpressure within the system housing for actuating the cell disconnect devices of the battery cells, wherein the means for establishing an overpressure may comprise one or more of the following: means for releasing a gas into the system housing, the means being arranged inside the system housing, a gas connector arranged at the system housing, the gas connector adapted to be connected to a gas supply outside the system housing, a venting valve of at least one of the battery cells for releasing venting gas from the battery cell into the system housing. The system housing may be gas-tight. The system housing may in particular be gas-tight at least in that the means for establishing an overpressure can establish such overpressure inside the system housing if the pressure is increased fast enough. For example, the system housing may comprise an equalizer valve with low gas throughput for balancing slow pressure changes between the inside of the system housing and the outside of the system housing. The means for providing an overpressure may be adapted to increase the pressure inside the system housing faster than the equalizer valve can balance it with the outside pressure so that the explained overpressure may still be achieved.

For example, such means for releasing a gas may comprise a gas generator, e.g. a pressurized gas tank, arranged inside the system housing. The gas generator may be triggered by a control unit, e.g. the BMU/BMS or BCU, if necessary, e.g. in case of a crash of a vehicle comprising the battery system. The gas generator may comprise compressed air or a pyrotechnic device like in an airbag allowing for providing an overpressure inside the system housing. Also, the gas generator may be adapted to combust/deflagrate a flammable gas-mixture inside the pack casing thereby providing an overpressure inside the system housing. When being triggered the gas generator thus establishes an overpressure with respect to the pressure present inside the cell housings of the battery cells thus triggering the cell disconnect devices of all of the battery cells. As a result, the battery systems are electrically disconnected from one another. In other words, the electrical interconnections between the battery systems are disconnected. The means for releasing a gas into the system housing may also be arranged outside of the battery system wherein via a gas connector arranged at the system housing a pressurized gas may be introduced into the system housing. For example, a gas supply may be arranged outside of the system housing, the gas supply being in fluid connection with the gas connector. If the gas generator is activated and/or the gas connector is opened, e.g. by a control unit as above, pressurized gas is vented into the system housing triggering all of the cell disconnects devices. As another means for providing the overpressure one or more, preferably all, of the battery cells may comprise a venting valve for venting gas from inside the cell housing of the battery cell to the outside into the system housing. The venting valve may be a one-way gas valve. The venting valve may vent the cell housing if there is an overpressure inside the cell housing as may occur, for example, in case of a thermal runaway of the cell. If one or more cells experience a thermal runaway, they can then vent the resulting venting products into the system housing thereby increasing the pressure inside the system housing. This way an overpressure is achieved in the system housing at least with respect to the pressure inside battery cells that do not experience a thermal runaway. Due to the overpressure the cell disconnect devices of these battery cells are triggered and the cells are consequently being disconnected from the rest of the cells.

As mentioned, via such means the overpressure in the system housing may be caused intentionally to permanently disconnect all battery cells. The means may be adapted to be activated automatically, e.g. when an electric vehicle comprising the battery system has an accident. If a crash sensor of the vehicle detects an accident, a control unit (e.g. the BMS) may activate the means for establishing the overpressure inside the system housing. Also, the means may be adapted to be activated manually, e.g. by recycling personnel recycling the battery, by firemen tending to a vehicle fire, or by mechanics maintaining the vehicle/battery system. Also, the whole battery system may be placed in a pressure vessel to apply overpressure from outside.

The electrical disconnection of the battery cell may be achieved by disconnecting one or more electrical connections, in particular inside the cell housing, between the electrochemical cell and the outside terminals. According to a respective aspect of the disclosure, the cell disconnect device is adapted to electrically disconnect the battery cell by electrically disconnecting the first electrode from the first terminal and/or by electrically disconnecting the second electrode from the second terminal. Thus, the electrical connection between the respective electrode which is arranged inside the cell housing and the terminal which is arranged at the outside of the cell housing may be disconnected. The electrical connection which is being disconnected is arranged preferably inside the cell housing. The electrical connection may be the first or second current collectors. Thus, the cell disconnect device may be adapted to disconnect or sever the first current collector and/or the second current collector. The cell disconnect device may comprise a disconnecting device, e.g. a circuit breaker or a fuse, the disconnecting device being arranged to electrically disconnect the first electrode from the first terminal and/or the second electrode from the second terminal. Such a disconnection can be achieved in a constructively relatively simple manner. Such a disconnection inside the cell housing is particularly secure as it cannot be accidentally reestablished by venting products, e.g. copper pieces, being deposited on the top of the battery cell.

According to an aspect of the disclosure, the cell disconnect device comprises a switching element adapted to be switched, by an overpressure outside of the cell housing, from a neutral position to an actuated position, wherein in the actuated position the switching element short-circuits the battery cell, and a disconnecting device adapted to electrically disconnect the first electrode from the first terminal and/or the second electrode from the second terminal as a result of the short-circuit. In the neutral position of the switching element the battery cell can be electrically connected to further battery cells of a battery system and can perform its intended function of delivering power to a vehicle. In the actuated position of the switching element, the switching element establishes a short-circuit current of the battery cell, in particular by electrically connecting the first electrode and the second electrode. The switching element may electrically connect the first and second electrode with one another e.g. by electrically connecting the first terminal with the second terminal. The short-circuit current triggers the disconnecting device and therefore disconnects the battery cell from further battery cells of the battery system as a result of an overpressure outside of the cell housing. As mentioned, the disconnecting device can e.g. be a circuit breaker or a fuse. The circuit breaker, as an electrical switch, has the advantage of being able to be reset to its normal operation so that it may be used again. A fuse, on the other hand, has the advantage of being constructively simpler and more reliable. With the cell disconnect device comprising the switching element and the disconnecting device the battery cell may be disconnected in a reliable and constructively simple manner.

According to a respective aspect of the disclosure, the cell housing is electrically connected to the first terminal and the disconnecting device is arranged to disconnect the first electrode and the first terminal and, further, the switching element is arranged such that, when actuated, the switching element electrically connects the cell housing and the second electrode thereby connecting the first electrode and the second electrode such that the disconnecting device is triggered and the electrical connection between the first electrode and the first terminal is severed. Because the switching element is adapted to provide an electrical connection between the cell housing and the second electrode and because the cell housing is electrically connected to the first terminal, the switching element electrically connects the first terminal and the second electrode. This results in an electrical interconnection of the first and second electrodes and thus to a short-circuit current flowing between the electrodes. The disconnecting device may be arranged at the electrical connection, in particular the first current collector, between the first electrode and the first terminal. For example, the first current collector may comprise a fuse, in particular a tapered section or thinned out portion functioning as a fuse, the tapered section having a higher electrical resistance than the rest of the first current collector, the tapered section being burned through by the short-circuit current. Thus, the electrical connection between the first electrode and the first terminal (and thus between the first and second electrode) may be severed. This way an electrical connection inside the cell housing is disconnected, in particular permanently. As mentioned, such a disconnection inside the cell housing is particularly secure as it cannot be accidentally reestablished by venting products, e.g. copper pieces, being deposited on the top of the battery cell. Further, such a disconnection is constructively relatively simple.

According to an aspect of the disclosure, the switching element is adapted to be mechanically actuated. As mentioned above, the switching element may be adapted to be electrically actuated, e.g. via a control unit. Preferably, however, the switching element is adapted to be mechanically actuated as this provides a simpler and less error-prone construction. According to a respective aspect of the disclosure, the switching element comprises a membrane arranged at the cell housing adapted to be deformed by an overpressure outside of the cell housing, wherein in the neutral position the membrane is bulged outwards and in the actuated position the membrane is bulged inwards into the cell housing by the overpressure outside of the cell housing, wherein in the actuated position the membrane short-circuits the battery cell. The switching element may be a membrane that is fixed at its periphery at the battery cell so as to allow it to be deformed between the two positions or, in other words, a diaphragm. For example, the membrane may be embedded in a housing wall of the cell housing. The cell housing may comprise a respective opening, the membrane being arranged in said opening in a gas-tight/sealed connection with the cell housing. In the neutral position the membrane is bulged or curved outwardly with respect to the cell housing. If there is an overpressure outside of the cell housing with respect to the inside of the cell housing, the membrane is mechanically deformed inwardly by the difference in pressure. Thus, in the actuated position the membrane is bulged or curved inwardly with respect to the cell housing. The membrane may connect the first and second electrode with one another as explained above when bulged inwards, i.e. in the actuated position, thus providing a short-circuit of the battery cell. This embodiment of the switching element is particularly simple in construction. No pressure sensor and no control unit actuating the membrane is needed. The membrane itself will simply switch from the neutral position to the actuated position if there is a predefined overpressure/pressure difference. The overpressure/pressure difference the membrane reacts to may be determined by the material the membrane is made of and/or by the thickness of the membrane.

As the membrane reacts to the pressure difference between the inside and outside pressure with respect to the cell housing, it is important to keep the inside pressure inside the cell housing at a constant level. The inside pressure may rise e.g. due to cell ageing. Thus, older cells may have a higher internal pressure such that a specific outside pressure, i.e. a specific pressure in the surrounding system housing, may no longer suffice to trigger the cell disconnect device as the membrane does not react. Keeping the inside pressure inside the cell housing at a constant level can be achieved e.g. in two ways. According to an aspect of the disclosure, the membrane is separated from the inside of the cell housing by a gas-tight separation member, wherein the membrane and the gas-tight separation member form an encapsulated space, a predefined reference pressure being applied to the encapsulated space. Accordingly, a separate space is provided for the inner wall of the membrane, the inner wall of the membrane thus not being in contact with the pressure inside the part of the cell housing that comprises the electrochemical cell but separated from that part via the gas-tight separation member. In other words, the inside of the membrane is encapsulated, i.e. not arranged in the same space as the electrolyte, but separated from the electrolyte in a gas-tight manner. This allows a defined reference pressure to be applied to the encapsulated space and thus to inside of the membrane, e.g. during production of the battery cell. A rise in inside pressure, e.g. due to ageing of the electrochemical cell, can thus no longer influence the behavior of the membrane. Instead, the membrane will reliably switch to the actuated position if a predefined overpressure outside the cell housing is provided.

According to another aspect of the disclosure, the battery cell comprises a one-way gas venting valve to release an overpressure inside of the cell housing to the outside of the cell housing. Such an overpressure inside the cell housing, in particular inside the part of the cell housing comprising the electrochemical cell, may occur due to cell ageing as mentioned above. Also, such an overpressure may occur due to a thermal runaway of the cell. Thus, alternatively or additionally to the membrane being encapsulated, any gas accumulating inside the part of cell housing (that comprises the electrochemical cell) resulting in a pressure higher than the outside pressure outside of the cell housing, will be vented to the outside of the cell housing keeping the inside pressure stable. Thus, the membrane may reliably switch to the actuated position even if not encapsulated. Further, such a valve may provide an overpressure in the system housing with respect to the inside of other battery cells so that in case of a thermal runaway the battery cell may trigger the cell disconnect devices of the other cells as mentioned above.

### Specific Embodiments

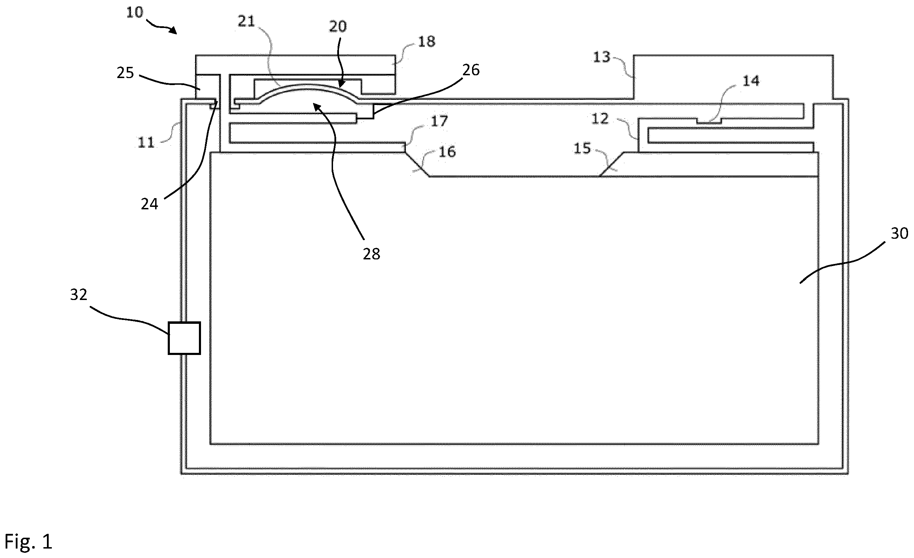

Fig. 1 is a schematic sectional view illustrating a battery cell according to an embodiment of the invention,

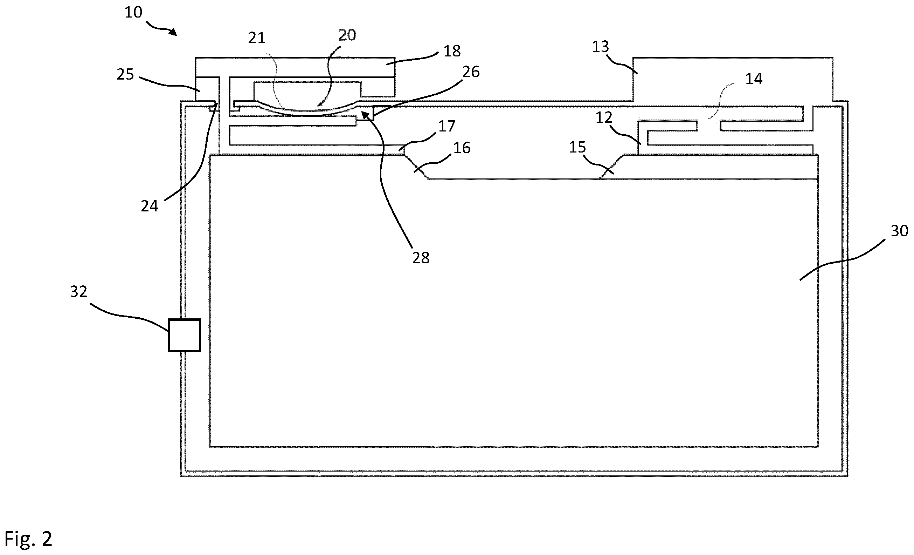

Fig. 2 is a schematic sectional view illustrating the battery cell of Fig. 1 with an actuated cell disconnect device, and

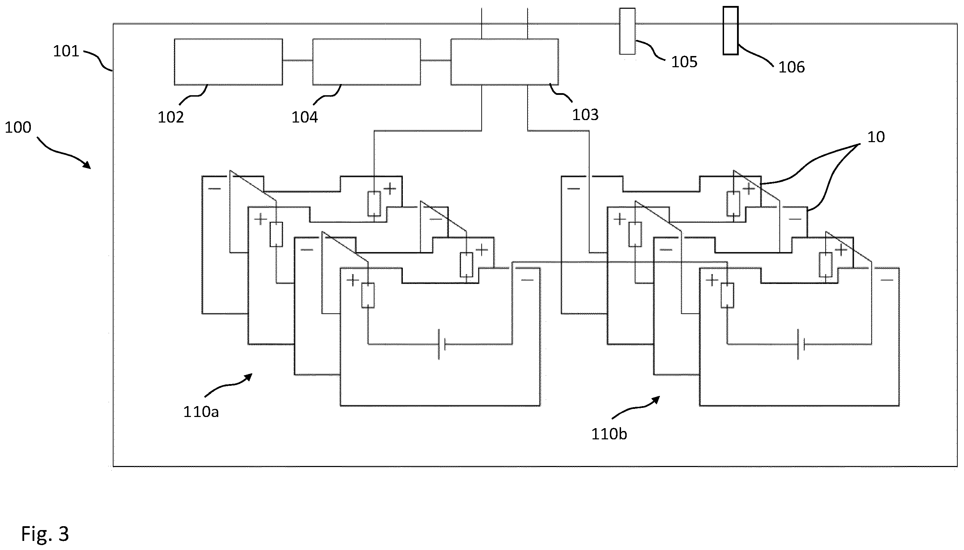

Fig. 3 is a battery system according to an embodiment of the invention comprising multiple of the battery cells shown in Fig. 1 and 2.

Fig. 1 shows a battery cell 10 according to an embodiment of the invention, the battery cell 10 comprising a cell housing 11, and an electrochemical cell 30 encased by the cell housing 11. The electrochemical cell 30 includes a first electrode 15 and a second electrode 16 via which electrical energy may be extracted from the electrochemical cell 30 via electrode terminals 13, 18 of the battery cell 10 which are arranged outside the cell housing 11 and are electrically connected to the electrochemical cell 30. In particular, a first terminal 13 is electrically connected to the first electrode 15 via a first current collector 12 and a second terminal 18 is electrically connected to the second electrode 16 via a second current collector 17. The battery cell 10 may form part of a battery pack, wherein the battery cell 10 may be electrically interconnected with further battery cells via its electrode terminals 13, 18.

The cell housing 11 is electrically connected to the first terminal 13 and thus via the first current collector 12 to the first electrode 15. The second current collector 17 is in contact with the second terminal 18 via an electrical connection extending through a through-hole 24 and is electrically isolated from the cell housing 11 via an insulation member 25. The first current collector 12 comprises a tapered section 14 which functions as a fuse as will be explained below.

The battery cell 10 further comprises a switching element 20 being embedded in the cell housing 11 near the second terminal 18, the switching element 20 comprising an electrically conductive membrane 21. The membrane 21 may be of circular shape and is integrated into an upper wall of the cell housing 11, the periphery of the membrane 21 being fixed at the cell housing 11. The membrane 21 thus forms a diaphragm. The membrane 21 is electrically conductive and in electrical contact with the cell housing 11. The membrane 21 is adapted to, in a neutral position shown in Fig. 1, bulge outwards to the outside of the cell housing 11 and, in an actuated position shown in Fig. 2, bulge inwards to the inside of the cell housing 11. During normal operation of the battery cell 10 the membrane 21 is in the neutral position shown in Fig. 1 so that the cell housing 11 and the second electrode 16 are electrically isolated from each other. During this normal operation the tapered section 14 is electrically conductive. Thus, during normal operation the battery cell may provide power to an electric vehicle.

If the pressure outside of the cell housing 11 exceeds the pressure inside of the cell housing 11 by a predefined value, the membrane 21 can no longer resist the difference in pressure and is deformed towards the inside of the cell housing 11. Thus, in case of overpressure outside of the cell housing 11 the membrane 21 snaps from the neutral position (Fig. 1) to the actuated position (Fig. 2). In the actuated position the membrane 21 contacts the second current collector 17 thereby establishing an electrical connection between the cell housing 11 and the second electrode 16. This results in a short circuit current inside the battery cell 10, because a connection between the two electrodes 15, 16 has been established, the short circuit current triggering the fuse 14 by blasting the tapered section as shown in Fig. 2. The fuse 14 electrically disconnects the first electrode 15 from the first terminal 13 and thus from the cell housing 11 and thus from the second electrode 16 so that the short-circuit current can no longer flow.

As a result, the battery cell 10 is disconnected from any further battery cells of the battery pack so that this battery cell 10 can no longer be the source of short circuits or electric arcing between the battery cells of the battery pack. Thus, the fuse 14 and the switching element 20 together provide a cell disconnect device that prevents a dangerous electrical potential to be build up.

As the membrane reacts to the pressure difference between the inside and outside pressure with respect to the cell housing, it is important to keep the inside pressure inside the cell housing at a constant level. The inside pressure may rise e.g. due to cell aging and/or because of a thermal runaway of the cell. Thus, the battery cell 10 may comprise a one-way gas venting valve 32 to release an overpressure inside of the cell housing 11 to the outside of the cell housing 11. This can prevent a pressure build-up inside the cell housing 11 due to chemical reactions (e.g. caused by electrolyte ageing). Overpressure inside the battery cell 10 is detrimental, because the outside pressure, i.e. the pressure in the surrounding system housing of a battery system comprising the battery cell 10, would need to overcome the additional pressure in the cell housing 11 to trigger the switching element 20. For the same reason, the battery cell 10 may comprise an encapsulated space 28 formed by a gas-tight separation member 26. The encapsulated space 28 separates the membrane 21 from the part of the cell housing 11 comprising the electrochemical cell 30 so that a rise in pressure inside that part of the cell housing 11 does not affect the pressure inside the encapsulated space 28. Inside the encapsulated space 28 a predefined reference pressure may be provided, e.g. during manufacture of the battery cell 10. The encapsulated space 28 ensures that the membrane 21 always switches to the actuated position at the predefined pressure.

The overpressure needed to actuate the switching element 20 may be provided by the battery cell 10 itself or by other means. For example, the battery cell 10 may provide at least a certain amount of overpressure outside of the battery cell 10 by exhausting gas and/or particle, e.g. during a thermal runaway, via the venting valve 32 to the outside. If one or more of the battery cells 10 of a battery system release their internal overpressure into a system housing, the outside pressure may raise. This way an overpressure may be achieved outside the battery cells 10 inside the surrounding system housing that may trigger the switching elements 20 of other cells.

Fig. 3 shows a battery system 100 according to an embodiment of the invention, the battery system 100 or battery pack including a system housing 101 and a plurality of battery cells 10 accommodated within the housing 101, the battery cells 10 each being designed as the battery cell 10 described above. The battery cells 10 are arranged in two battery modules 110a, 110b, each of the battery modules 110a, 110b consisting of four battery cells 10 electrically connected in series. The two battery modules 110a, 110b are electrically connected in series as well and further to a battery disconnect unit, BDU, 103. The BDU 103 connects the battery system 100 electrically to the outside.

The battery system 100 further comprises a gas generator 102 arranged withing the system housing 101 and a battery management unit, BMU, 104. The BMU 104 is adapted to trigger the gas generator 102 to release gas into the system housing 101, the system housing 101 being gas-tightly sealed to the outside. The gas generator 102 can release sufficient gas into the battery system 100 to achieve an overpressure with respect to the inside of the battery cells 10 and thus trigger the switching elements 20 of all battery cells 10 simultaneously. Thus, via the BMU 104 all of the battery cells 10 may be electrically disconnected from one another as explained above. In particular, each battery cell electrode of the battery system 100 may become electrically disconnected from any other battery cell electrode. Disconnected battery cells (battery cell electrodes) can no longer be the source of short circuits and electric arcing between the battery cells. They can no longer add up their voltages to dangerous electrical potentials. Only voltages equal to the electrochemical potential of a single electrochemical cell (typically < 5V) become present in the battery system.

Alternatively or additionally to the gas generator 102, the battery system 100 may comprise a gas connector 105 contained in/at the system housing 101 and adapted to be connected to an external gas supply (e.g. a gas-compressor) outside the system housing 101 such that the external gas supply can transfer gas into the system housing 101 in order to increase the gas-pressure inside the system housing 101.

The battery system 100 further comprises an equalizer valve 106 arranged at the system housing 101, the equalizer valve 106 having a low gas throughput for balancing slow pressure changes between the inside of the system housing and the outside of the system housing. The means for providing an overpressure, i.e. the gas generator 102 and/or the external gas supply supplying gas via the gas connector 105, may be adapted to increase the pressure inside the system housing faster than the equalizer valve 106 can balance it with the outside pressure so that the explained overpressure may still be achieved.

### Reference signs

- 10: battery cell
- 11: cell housing
- 12: first current collector
- 13: first terminal
- 14: fuse
- 15: first electrode
- 16: second electrode
- 17: second current collector
- 18: second terminal
- 20: switching element
- 21: membrane
- 24: through-hole
- 25: insulation member
- 26: gas-tight separation member
- 28: encapsulated space
- 30: electrochemical cell
- 32: one-way gas venting valve
- 100: battery system
- 101: system housing
- 102: gas generator
- 103: BDU
- 104: BMU
- 105: gas connector
- 106: equalizer valve
- 110a: battery module
- 110b: battery module

## Claims

1. A battery cell (10) for an electric vehicle, the battery cell comprising a cell housing (11), an electrochemical cell (30) encased by the cell housing (11), the electrochemical cell (30) comprising a first electrode (15) and a second electrode (16), a first terminal (13) being electrically connected to the first electrode (15) and a second terminal (18) being electrically connected to the second electrode (16), the battery cell (10) further comprising a cell disconnect device (14, 20) adapted to electrically disconnect the battery cell (10) from further battery cells of a battery system in case of an overpressure outside of the cell housing (11).

2. The battery cell of claim 1, wherein the cell disconnect device (14, 20) is adapted to electrically disconnect the battery cell (10) by electrically disconnecting the first electrode (15) from the first terminal (13) and/or by electrically disconnecting the second electrode (16) from the second terminal (18).

3. The battery cell of claim 1 or 2, wherein the cell disconnect device (14, 20) comprises a switching element (20) adapted to be switched, by an overpressure outside of the cell housing (11), from a neutral position to an actuated position, wherein in the actuated position the switching element (20) short-circuits the battery cell (10), and a disconnecting device (14) adapted to electrically disconnect the first electrode (15) from the first terminal (13) and/or the second electrode (16) from the second terminal (18) as a result of the short-circuit.

4. The battery cell of claim 3, wherein the switching element (20), in the actuated position, establishes an electrical connection between the first electrode (15) and the second electrode (16).

5. The battery cell of claim 4, wherein the cell housing (11) is electrically connected to the first terminal (13), the disconnecting device (14) is arranged to disconnect the electrical connection between the first electrode (15) and the first terminal (13), and the switching element (20) is arranged such that, when actuated, the switching element (20) electrically connects the cell housing (11) and the second electrode (16) thereby connecting the first electrode (15) and the second electrode (16) such that the disconnecting device (14) is triggered and the electrical connection between the first electrode (15) and the first terminal (13) is disconnected.

6. The battery cell of any one of claims 3 to 5, wherein the switching element (20) is adapted to be mechanically actuated.

7. The battery cell of claim 6, wherein the switching element (20) comprises a membrane (21) arranged at the cell housing (11) adapted to be deformed by an overpressure outside of the cell housing (11), wherein in the neutral position the membrane (21) is bulged outwards and in the actuated position the membrane (21) is bulged inwards into the cell housing (11) by the overpressure outside of the cell housing (11), wherein in the actuated position the membrane (21) short-circuits the battery cell (10).

8. The battery cell of claim 7, wherein the membrane (21) is separated from the inside of the cell housing (11) by a gas-tight separation member (26), wherein the membrane (21) and the gas-tight separation member (26) form an encapsulated space (28), a predefined reference pressure being applied to the encapsulated space (28).

9. The battery cell of any one of the preceding claims, wherein the battery cell (10) comprises a one-way gas venting valve (32) to release an overpressure inside of the cell housing (11) to the outside of the cell housing (11).

10. A battery system (100), comprising a system housing (101) and a plurality of battery cells (10) according to one of the preceding claims accommodated within the system housing (101).

11. The battery system (100) of claim 10, comprising means for establishing an overpressure within the system housing (101) for actuating the cell disconnect devices (14, 20) of the battery cells (10).

12. The battery system (100) of claim 11, wherein the means for establishing an overpressure comprises one or more of the following: means (102) for releasing a gas into the system housing (101), the means (102) being arranged inside the system housing (101), a gas connector (105) arranged at the system housing (101), the gas connector (105) adapted to be connected to a gas supply outside the system housing (101), a venting valve (32) of at least one of the battery cells for releasing venting gas from the battery cell (10) into the system housing (101).

## Patentansprüche

1. Batteriezelle (10) für ein elektrisches Fahrzeug, wobei die Batteriezelle ein Zellengehäuse (11), eine elektrochemische Zelle (30), die vom Zellengehäuse (11) umschlossen ist, umfasst, wobei die elektrochemische Zelle (30) eine erste Elektrode (15) und eine zweite Elektrode (16) umfasst, wobei ein erster Anschluss (13) elektrisch mit der ersten Elektrode (15) verbunden ist und ein zweiter Anschluss (18) elektrisch mit der zweiten Elektrode (16) verbunden ist, wobei die Batteriezelle (10) ferner eine Zellentrennungsvorrichtung (14, 20) umfasst, die angepasst ist, um die Batteriezelle (10) von weiteren Batteriezellen eines Batteriesystems im Falle eines Überdrucks außerhalb des Zellengehäuses (11) elektrisch zu trennen.

2. Batteriezelle nach Anspruch 1, wobei die Zellentrennungsvorrichtung (14, 20) angepasst ist, um die Batteriezelle (10) durch elektrisches Trennen der ersten Elektrode (15) vom ersten Anschluss (13) und/oder durch elektrisches Trennen der zweiten Elektrode (16) vom zweiten Anschluss (18) elektrisch zu trennen.

3. Batteriezelle nach Anspruch 1 oder 2, wobei die Zellentrennungsvorrichtung (14, 20) ein Schaltelement (20), das angepasst ist, um durch einen Überdruck außerhalb des Zellengehäuses (11) von einer neutralen Position in eine betätigte Position geschaltet zu werden, wobei das Schaltelement (20) in der betätigten Position die Batteriezelle (10) kurzschließt, und eine Trennungsvorrichtung (14), die angepasst ist, um die erste Elektrode (15) vom ersten Anschluss (13) und/oder die zweite Elektrode (16) vom zweiten Anschluss (18) als Ergebnis des Kurzschlusses elektrisch zu trennen, umfasst.

4. Batteriezelle nach Anspruch 3, wobei das Schaltelement (20) in der betätigten Position eine elektrische Verbindung zwischen der ersten Elektrode (15) und der zweiten Elektrode (16) herstellt.

5. Batteriezelle nach Anspruch 4, wobei das Zellengehäuse (11) elektrisch mit dem ersten Anschluss (13) verbunden ist, die Trennungsvorrichtung (14) so angeordnet ist, dass sie die elektrische Verbindung zwischen der ersten Elektrode (15) und dem ersten Anschluss (13) trennt, und das Schaltelement (20) so angeordnet ist, dass bei Betätigung das Schaltelement (20) das Zellengehäuse (11) und die zweite Elektrode (16) elektrisch verbindet, wodurch die erste Elektrode (15) und die zweite Elektrode (16) so verbunden werden, dass die Trennungsvorrichtung (14) ausgelöst wird und die elektrische Verbindung zwischen der ersten Elektrode (15) und dem ersten Anschluss (13) getrennt wird.

6. Batteriezelle nach einem der Ansprüche 3 bis 5, wobei das Schaltelement (20) angepasst ist, um mechanisch betätigt zu werden.

7. Batteriezelle nach Anspruch 6, wobei das Schaltelement (20) eine am Zellengehäuse (11) angeordnete Membran (21) umfasst, die angepasst ist, um durch einen Überdruck außerhalb des Zellengehäuses (11) verformt zu werden, wobei in der neutralen Position die Membran (21) nach außen gewölbt ist und in der betätigten Position die Membran (21) durch den Überdruck außerhalb des Zellengehäuses (11) nach innen in das Zellengehäuse (11) gewölbt ist, wobei in der betätigten Position die Membran (21) die Batteriezelle (10) kurzschließt.

8. Batteriezelle nach Anspruch 7, wobei die Membran (21) von der Innenseite des Zellengehäuses (11) durch ein gasdichtes Trennungselement (26) getrennt ist, wobei die Membran (21) und das gasdichte Trennungselement (26) einen verkapselten Raum (28) ausbilden, wobei der verkapselte Raum (28) mit einem vordefinierten Referenzdruck beaufschlagt wird.

9. Batteriezelle nach einem der vorhergehenden Ansprüche, wobei die Batteriezelle (10) ein Einweg-Gasentlüftungsventil (32) umfasst, um einen Überdruck im Inneren des Zellengehäuses (11) an die Außenseite des Zellengehäuses (11) abzugeben.

10. Batteriesystem (100), umfassend ein Systemgehäuse (101) und eine Vielzahl von Batteriezellen (10) nach einem der vorhergehenden Ansprüche, die im Systemgehäuse (101) aufgenommen sind.

11. Batteriesystem (100) nach Anspruch 10, umfassend Mittel zum Aufbauen eines Überdrucks innerhalb des Systemgehäuses (101) zum Betätigen der Zellentrennungsvorrichtungen (14, 20) der Batteriezellen (10).

12. Batteriesystem (100) nach Anspruch 11, wobei die Mittel zum Aufbauen eines Überdrucks eines oder mehrere von Folgendem umfassen: ein Mittel (102) zum Abgeben eines Gases in das Systemgehäuse (101), wobei das Mittel (102) innerhalb des Systemgehäuses (101) angeordnet ist, einen am Systemgehäuse (101) angeordneten Gasverbinder (105), wobei der Gasverbinder (105) angepasst ist, um mit einer Gasversorgung außerhalb des Systemgehäuses (101) verbunden zu werden, ein Entlüftungsventil (32) von mindestens einer der Batteriezellen zum Abgeben von Entlüftungsgas aus der Batteriezelle (10) in das Systemgehäuse (101).

## Revendications

1. Élément de batterie (10) pour un véhicule électrique, l'élément de batterie comprenant un boîtier d'élément (11), un élément électrochimique (30) enveloppé par le boîtier d'élément (11), l'élément électrochimique (30) comprenant une première électrode (15) et une seconde électrode (16), une première borne (13) étant électriquement connectée à la première électrode (15) et une seconde borne (18) étant électriquement connectée à la seconde électrode (16), l'élément de batterie (10) comprenant en outre un dispositif de déconnexion d'élément (14, 20) adapté pour déconnecter électriquement l'élément de batterie (10) d'autres éléments de batterie d'un système de batterie en cas d'une surpression à l'extérieur du boîtier d'élément (11).

2. Élément de batterie selon la revendication 1, dans lequel le dispositif de déconnexion d'élément (14, 20) est adapté pour déconnecter électriquement l'élément de batterie (10) en déconnectant électriquement la première électrode (15) de la première borne (13) et/ou en déconnectant électriquement la seconde électrode (16) de la seconde borne (18).

3. Élément de batterie selon la revendication 1 ou 2, dans lequel le dispositif de déconnexion d'élément (14, 20) comprend un élément de commutation (20) adapté pour être commuté, par une surpression à l'extérieur du boîtier d'élément (11), d'une position neutre à une position actionnée, dans lequel, dans la position actionnée, l'élément de commutation (20) court-circuite l'élément de batterie (10), et un dispositif de déconnexion (14) adapté pour déconnecter électriquement la première électrode (15) de la première borne (13) et/ou la seconde électrode (16) de la seconde borne (18) en conséquence du court-circuit.

4. Élément de batterie selon la revendication 3, dans lequel l'élément de commutation (20), dans la position actionnée, établit une connexion électrique entre la première électrode (15) et la seconde électrode (16).

5. Élément de batterie selon la revendication 4, dans lequel le boîtier d'élément (11) est électriquement connecté à la première borne (13), le dispositif de déconnexion (14) est agencé pour déconnecter la connexion électrique entre la première électrode (15) et la première borne (13), et l'élément de commutation (20) est agencé de sorte que, lorsqu'il est actionné, l'élément de commutation (20) connecte électriquement le boîtier d'élément (11) et la seconde électrode (16), connectant ainsi la première électrode (15) et la seconde électrode (16) de sorte que le dispositif de déconnexion (14) soit déclenché et que la connexion électrique entre la première électrode (15) et la première borne (13) soit déconnectée.

6. Élément de batterie selon l'une quelconque des revendications 3 à 5, dans lequel l'élément de commutation (20) est adapté pour être mécaniquement actionné.

7. Élément de batterie selon la revendication 6, dans lequel l'élément de commutation (20) comprend une membrane (21) agencée au niveau du boîtier d'élément (11) adaptée pour être déformée par une surpression à l'extérieur du boîtier d'élément (11), dans lequel, dans la position neutre, la membrane (21) est bombée vers l'extérieur, et dans la position actionnée, la membrane (21) est bombée vers l'intérieur dans le boîtier d'élément (11) par la surpression à l'extérieur du boîtier d'élément (11), dans lequel, dans la position actionnée, la membrane (21) court-circuite l'élément de batterie (10).

8. Élément de batterie selon la revendication 7, dans lequel la membrane (21) est séparée de l'intérieur du boîtier d'élément (11) par un organe de séparation étanche aux gaz (26), dans lequel la membrane (21) et l'organe de séparation étanche aux gaz (26) forment un espace encapsulé (28), une pression de référence prédéfinie étant appliquée à l'espace encapsulé (28).

9. Élément de batterie selon l'une quelconque des revendications précédentes, dans lequel l'élément de batterie (10) comprend une vanne d'évacuation de gaz anti-retour (32) pour libérer une surpression à l'intérieur du boîtier d'élément (11) vers l'extérieur du boîtier d'élément (11).

10. Système de batterie (100), comprenant un boîtier de système (101) et une pluralité d'éléments de batterie (10) selon l'une des revendications précédentes logés au sein du boîtier de système (101).

11. Système de batterie (100) selon la revendication 10, comprenant un moyen d'établissement d'une surpression au sein du boîtier de système (101) pour l'actionnement des dispositifs de déconnexion d'élément (14, 20) des éléments de batterie (10).

12. Système de batterie (100) selon la revendication 11, dans lequel le moyen d'établissement d'une surpression comprend l'un ou plusieurs parmi ce qui suit : un moyen (102) de libération d'un gaz dans le boîtier de système (101), le moyen (102) étant agencé à l'intérieur du boîtier de système (101), un raccord de gaz (105) agencé au niveau du boîtier de système (101), le raccord de gaz (105) étant adapté pour être raccordé à une alimentation en gaz à l'extérieur du boîtier de système (101), une vanne d'évacuation (32) d'au moins l'un des éléments de batterie pour la libération d'un gaz d'évacuation de l'élément de batterie (10) dans le boîtier de système (101).
